# EUROPÄISCHE PATENTANMELDUNG

(11) **EP 1 287 877 A1**
(43) Veröffentlichungstag der Anmeldung: **05.03.2003**
(21) Anmeldenummer: 02018070.9
(22) Anmeldetag: 13.08.2002
(51) Int. Cl.: B01D 69/06, B01L 3/00

(54) **Strukturierte Membran**

(30) Priorität: 14.08.2001 DE 10139830
(71) Anmelder: F. HOFFMANN-LA ROCHE AG, 4070 Basel (CH); Roche Diagnostics GmbH, 68305 Mannheim (DE)
(72) Erfinder: Harttig, Herbert, Dr., 67122 Altrip (DE); Effenhauser, Carlo, Dr., 69469 Weinheim (DE)
(74) Vertreter: Weiss, Wolfgang, Dipl.-Chem. Dr.

(57) **Zusammenfassung**

Die Erfindung betrifft eine flächige permeable Membran, die auf mindestens einer Seite Ausnehmungen, vorzugsweise in Form von Kanalstrukturen aufweist, die deutlich größer sind als die Poren der Membran.

## Beschreibung

Die Erfindung betrifft eine flächige permeable Membran, die auf mindestens einer Seite Ausnehmungen, vorzugsweise in Form von Kanalstrukturen aufweist.

Es ist bekannt, polymere Separationsmembranen in Form von Flachmembranen oder Hohlfasermembranen zu fertigen. Dafür gibt es eine sehr große Vielfalt von Materialien und Verfahren. Als Beispiele seien Dialyseflachmembranen in den Firmen Gambro, Hospal und Akzo-Enka-Membrana genannt. Ein weiteres Beispiel ist die hoch asymmetrische Mikrofiltrationsmembran der Fa. Memtec, jetzt US-Filter Memcor. Ein weiteres Beispiel für Flachmembranen sind Kernspurmembranen von Nuclepore.

Miniaturisierte Stoffaustausch-Apparate mit Membranen werden gefertigt, indem in planare Oberflächen feine Kanäle eingearbeitet werden, die dann mit einer geeigneten Membran überspannt werden (Lin et al., 0.43 3, IMRET 1999). Ein ähnliches Vorgehen ist in der deutschen Anmeldung DE 100 10 587.4 beschrieben; auch dort ist in ein Substrat ein Kanalsystem eingearbeitet, welches von einer Austauschmembran überspannt wird. In diesen Vorrichtungen werden Fließwege somit separat gefertigt und dann von einer permeablen Membran überspannt. Dies gilt auch für den Fall, dass die Fließwege statistisch durch Gewebe, saugfähige Vliese oder strukturierte Oberflächen bereitgestellt werden.

Zum Stand der Technik zählt ebenfalls die Erzeugung von Fließwegen in flexiblen, im Vergleich zu Membranen relativ dicken Polysiloxanelastomerschichten gemäß EP 0 527 905. Diese Polysiloxanelastomere sind jedoch nicht als poröse Membranen im Sinne der vorliegenden Erfindung zu verstehen.

Nachteilig von miniaturisierten Stoffaustauschvorrichtungen nach dem Stand der Technik ist somit, dass die Kanalstrukturen zum konvektiven Fluidtransport entweder durch separate feinstrukturierte Bauteile, sogenannte Spacer, oder durch Einbringen der Kanalstrukturen in undurchlässige Trägerstrukturen hergestellt werden. Da die Trägerstrukturen bzw. Spacer in aller Regel auch noch mechanische Belastungen aufnehmen müssen, sind solcherart eingebrachte miniaturisierte Strukturen nur mit hohem Aufwand und relativ großen Werkzeugverschleiß herzustellen.

Eine Aufgabe der vorliegenden Erfindung bestand somit darin, neue Membranen bzw. diese Membranen enthaltende Stoffaustauschvorrichtungen bereitzustellen, welche die oben geschilderten Nachteile nicht aufweisen. Weiterhin sollen diese Membranen auf einfachem Weg und reproduzierbar hergestellt werden können.

Diese Aufgabe wird gelöst durch eine flächige permeable Membran, die auf mindestens einer Seite Ausnehmungen aufweist, wobei die Abmessungen der Ausnehmungen die nominelle Porengröße der Membran mindestens um den Faktor 5, vorzugsweise mindestens um den Faktor 10 übertreffen.

Die nominelle Porengröße einer Membran bezeichnet den Durchmesser eines Partikels oder Moleküls, welches mit einer Wahrscheinlichkeit von 95 % die Membran passiert (vgl. auch Marcel Mulder "Basic Principles of Membrane Technology" Kluver Academic Publishers, 1991).

Die permeable Membran kann einerseits eine poröse Membran sein, d.h. eine Membran, die diskrete Poren aufweist. Andererseits kann die Membran eine homogene Löslichkeitsmembran ohne diskrete Poren sein, in der der Stofftransport durch Lösung des Permeats im Polymer und die Trennung aufgrund unterschiedlicher Löslichkeiten im Polymer erfolgen. Auch für solche permeablen Membranen kann eine nominelle Porengröße bestimmt werden.

Die Ausnehmungen können auf einer oder beiden Seiten der Membran vorgesehen sein und sind vorzugsweise als Kanalstrukturen ausgestaltet. Durch diese Ausnehmungen bzw. Kanalstrukturen ist ein konvektiver Fluidtransport möglich, wobei Fluid in den Kanalstrukturen gleichzeitig durch den diffusiven oder konvektiven Stoffaustausch über die Membran mit der Umgebung der Membran in Wechselwirkung steht. Dies ist besonders von Vorteil in miniaturisierten Analyse- und Reaktionssystemen, in denen Mikrofluidik und Mikroseparationstechnik kombiniert werden müssen.

Die Erfindung betrifft eine flächige permeable Membran. Die Membranfläche ist per se nicht begrenzt. Die Dicke der Membran ist bevorzugt im Bereich von 1µm bis 1 000 µm und besonders bevorzugt im Bereich von 10 µm bis 200 µm. Die nominelle Porengröße der Membran ist vorzugsweise im Bereich von 0,2 nm bis 5 µm.

Die Ausnehmungen der erfindungsgemäßen Membran haben vorzugsweise einen mittleren Durchmesser von 5-500 µm, besonders bevorzugt von 10-200 µm. Der mittlere Durchmesser der Ausnehmungen ist mindestens um den Faktor 5 und vorzugsweise mindestens um den Faktor 10 größer als der nominelle Durchmesser der Poren, die für eine Stofftrennung innerhalb der Membran verantwortlich sind.

Die Membran selbst weist eine Struktur auf, wie sie in verschiedenen Flachmembranen bereits bekannt ist. Es können sein:
- gelartige Strukturen, wie z.B. bei Löslichkeitsmembranen, die als Dialysemembranen verwendet werden,
- mikroporöse und makroporöse Strukturen,
- asymmetrische Strukturen, wie sie bei Ultrafiltrations- und Mikrofiltrationsmembranen bekannt sind.

Die erfindungsgemäßen Membranen können aus bekannten Materialien aufgebaut sein. Die erfindungsgemäße Membran kann aus einem einzigen Material oder aus mehreren Materialien, die z.B. schichtweise angeordet sind, aufgebaut sein. In einer bevorzugten Ausführungsform werden Polymermaterialien, wie etwa Polyacrylamide, Polyacrylonitrile, Polyamide, Polybenzimidazole, Polybutadiene, Polycarbonate, Polydimethylsiloxane, Polyethersulfone, Polyetherimide, Polyolefine, Polyethylenterephthalate, Polymethylmethacrylat, Polymethylpenten, Polyphenylenoxid, Polystyrol, Polysulfone, Polyvinylalkohol, Polyvinylchlorid oder/und Polyvinylidenfluorid eingesetzt. In einer weiteren bevorzugten Ausführungsform werden Keramikmaterialien, wie etwa Aluminiumoxid (Al₂O₃), Titandioxid (TiO₂) oder Zirkonoxid eingesetzt.

Die erfindungsgemäßen Membranen können in Trennvorrichtungen eingesetzt werden, insbesondere in Vorrichtungen zum Stoffaustausch über die Membran. Derartige Vorrichtungen können beispielsweise mindestens eine der erfindungsgemäßen Membranen in Kombination mit einem nichtpermeablen und vorzugsweise planaren Träger enthalten. In einer weiteren Ausführungsform der Erfindung können auch zwei oder mehr und gegebenenfalls unterschiedliche flächige permeable Membranen zur Herstellung einer Trennvorrichtung verwendet werden.

Die erfindungsgemäßen Membranen zeichnen sich dadurch aus, dass nach Aufbringen der Membran mit der Unterseite auf eine planare Unterlage die Kanalstrukturen geschlossene Kanäle ausbilden. In diesen Kanälen ist es möglich, Flüssigkeitstransport zu betreiben. Der Flüssigkeitstransport in diesen Kanälen erfolgt wesentlich schneller als ein Flüssigkeitstransport durch die Membranstruktur quer zu den Kanälen. Die Flüssigkeit, die in diesen Kanälen transportiert wird, kann über die Membranstruktur in Austausch mit einer anderen Flüssigkeit stehen, welche sich oberhalb der Membran befindet. Es ist somit möglich, z.B. Dialyse, Ultrafiltration, Nanofiltration oder Mikrofiltration zu betreiben. Auch Gastrennung ist mit der erfindungsgemäßen Vorrichtung machbar. Besonders geeignet ist die erfindungsgemäße Membran für die Durchführung der Mikrodialyse.

Ein weiterer Gegenstand der vorliegenden Erfindung ist ein Verfahren zur Herstellung einer porösen Membran mit Ausnehmungen auf mindestens einer Seite davon, umfassend die Schritte:
(a) Bereitstellen eines Substrats, das auf seiner Oberfläche Erhebungen als Negativ der gewünschten Ausnehmungen aufweist,
(b) Aufbringen des Membranmaterials oder eines Vorläufers davon auf das Substrat und
(c) Formen der porösen Membran auf dem Substrat.

Zur Herstellung der erfindungsgemäßen Membran werden auf einem Substrat, z.B. einer Platte, einem Band oder einer Trommel, die gewünschten Kanalstrukturen in Form eines Negativs, also als Erhebungen erzeugt. Dies kann erfolgen durch spanabhebende Verfahren oder durch Ätzverfahren, analog zu den Verfahren der Mikroelektronik. Auf dieses Substrat wird eine Schicht einer Lösung oder Dispersion des Membranmeterials oder eines Vorläufers davon in der gewünschten Dicke ausgebreitet. Dabei kann jede im Stand der Technik bekannte membranbildende Polymerlösung eingesetzt werden. Durch Ausdampfung von Lösungsmittel und/oder Austausch des Lösungsmittels mit einem Fällmittel wird eine Polymermembran gebildet. Es ist auch möglich, ein Slurry von einem membranbildendem organischen Polymer mit feinteiligen anorganischen Partikeln, bevorzugt Al₂O₃ einzusetzen. Letzteres ist bekannt unter dem Namen Alceru-Verfahren (Vorbach, Schulze, Täger; Herstellung keramischer Hohlmembranen und Filamente nach dem Lyocell-Verfahren; Keramische Zeitschrift 50 (3), 176-179, 1988) und (Vorbach, Schulze, Taeger; Keramische Hohlmembranen, Filamente auf Basis des Alceru-Verfahrens, Technische Textilien, Jahrgang 41, November 1988, 188-193).

Die Membranbildung nach der sogenannten Phaseninversion ist an sich bekannt. Durch Auswaschen mit Nichtlösemittel wird das Lösemittel weitgehend aus der gebildeten Membran entfernt. Nach vollständiger Verfestigung wird die Membran vom Substrat abgenommen. Anstelle der Erhebungen auf dem Substrat finden sich nun in der Membranunterseite entsprechende Kanalstrukturen. Bei keramischen Membranen erfolgt an dieser Stelle noch das Austreiben des Binders und das Sintern der keramischen Partikel.

Zur Herstellung von Stoffaustauschapparaten kann die Membran mit der Unterseite auf einem planen Träger aufgebracht und flüssigkeitsdicht fixiert werden. Dies geschieht vorwiegend durch thermisches Verschweißen, durch Klebemittel oder durch Restlösemittel, welches sich in der Membran befindet und die Oberfläche des Trägers ausreichend anlöst, um eine dichte Klebeverbindung zu erreichen.

Durch das Zusammenführen von einer erfindungsgemäß strukturierten Membran und einem planen Träger werden vollständig geschlossene Kapillaren gebildet. Zeigen die Kapillarenöffnungen zur Außenwelt hin, so können sie mit Flüssigkeit gefüllt werden. Flüssigkeit kann in ihnen transportiert werden. Wird die Oberseite der Membran mit einer Lösung kontaktiert, so ist zwischen der Flüssigkeit in den Kanälen und der Lösung oberhalb der Membran ein Stoffaustausch durch die Membranstruktur hindurch möglich.

Werden Kanäle in geringem Abstand voneinander geführt, so besteht bei großporigen Strukturen die Möglichkeit eines hydraulischen Kurzschlusses. Um dem vorzubeugen, kann die Membranstruktur zwischen den beiden Kanälen mechanisch oder thermisch ganz oder teilweise verdichtet und damit undurchlässiger für Flüssigkeit gemacht werden.

Werden mindestens zwei der oben beschriebenen Membranen mit Kanalstrukturen auf der Unterseite miteinander kombiniert, so ist es möglich, Stoffaustauschapparate zu bauen, für die keine oder nur noch eine geringere Anzahl von Spacern notwendig ist. Insbesondere bei Membranen mit sehr hoher Oberflächenporosität ist es ohne Nachteil möglich, die unstrukturierten Oberseiten aufeinander zu legen und einen Stoffaustausch von einer Kanalschicht in die nächste Kanalschicht vorzunehmen. Damit wird es insbesondere möglich, miniaturisierte Stoffaustauschapparate zu bauen, die sehr hohe spezifische Austauschleistung ermöglichen. Gleichzeitig weisen diese Stoffaustauschapparate extrem kleine Totvolumina auf.

Werden zwei der oben beschriebenen Membranen mit den unstrukturierten Oberseiten aufeinander fixiert, ist es möglich, eine Membran mit Kanalstrukturen auf beiden Seiten zu erhalten. Bevorzugt werden dazu die Membranen in einem Zustand, in dem noch ausreichende Mengen Restlösemittel in den Membranen vorhanden sind, aufeinander gelegt und durch Einwirkung von Druck, Temperatur oder/und Restlösemittel miteinander verbunden. Am einfachsten kann Druck ausgeübt werden, wenn die beiden zu verbindenden Membranen sich noch auf dem Substrat befinden, auf dem die mikrostrukturierten Kanäle vorgeformt sind. Vorzugsweise werden die Membranen unauflöslich miteinander verbunden.

Ein Vorteil der erfinderischen Lösung ist zum einen, dass die Herstellung der miniaturisierten Kanalstrukturen in einem einfachen Abformprozess erfolgt, der in keiner Weise belastend für das Werkzeug ist und somit lange Lebensdauer erwarten lässt. Ein weiterer Vorteil ist eine hohe Fertigungsgeschwindigkeit. Noch ein weiterer Vorteil ist die Variabilität des Verfahrens, die es ermöglicht, mit geringem Aufwand unterschiedlichste Strukturen zu kombinieren. Außerdem besteht die Möglichkeit, Stoffaustauschapparate zu bauen, die extrem hohe spezifische Austauschleistungen bezogen auf das Bauvolumen aufweisen. Noch ein weiterer Vorteil ist es, dass die damit realisierbaren miniaturisierten Stoffaustauschapparate extrem kleine Totvolumina aufweisen.

Weiterhin soll die Erfindung durch die nachfolgenden Beispiele erläutert werden.

### Beispiele

### Beispiel 1: Herstellung einer Polymerlösung

In einem 2 I Rührkolben wurden 120 g eines aromatisch-aliphatischen Polyamids (Trogamid T, Degussa-Hüls, Deutschland) zusammen mit 55 g Polyvinylpyrrolidon mit Molekulargewicht 3500 (Polidone, BASF AG, Ludwigshafen, Deutschland), in 825 g N-Methylpyrrolidon (Riedel de Haen, Best.Nr. 15780) bei einer Temperatur von 60° C unter Rühren gelöst. Nach 8 Stunden war die Lösung erfolgt. Die Polymerlösung wurde evakuiert, über Nacht stehen gelassen und am nächsten Morgen verwendet.

### Beispiel 2: Herstellung eines Substrats

Als Substrat diente ein Silikonwafer mit einem Durchmesser von 100 mm, auf dem durch photolithografische Verfahren eindimensionale Arrays aus jeweils 40 parallelen Rippen mit einer Höhe von 40 µm, einer Breite von 100 µm, einem Abstand von 300 µm und einer Länge von 20 mm erzeugt wurden. Zwischen den Arrays verblieben 5 mm breite Bereiche ohne Rippen.

### Beispiel 3: Herstellung einer Membran

Der Silikonwafer nach Beispiel 2 wurde auf einer Glasplatte fixiert.
Ca. 20 ml der Polymerlösung gemäß Beispiel 1 wurden vor den Wafer auf die Glasplatte gegossen und durch ein Rakel zu einer dünnen Schicht ausgebreitet. Das Rakel war so eingestellt, dass die Nassschichtdicke über dem Wafer ca. 240 µm betrug. Unmittelbar nach dem Ausbreiten der Polymerlösung wurde die Glasplatte mit dem Wafer und der Polymerschicht in ein Wasserbad bei Raumtemperatur gegeben. Innerhalb weniger Minuten war die Membran vollständig ausgefallen und konnte vom Wafer abgelöst werden.

Zur vollständigen Entfernung des Lösemittels wurde die Membran 2 mal für 5 min in frisches destilliertes Wasser gegeben. Die feuchte Membran wurde in einer 15 gewichtsprozentigen wässrigen Glycerinlösung für 15 Minuten getränkt, senkrecht aufgehängt und über Nacht bei Raumtemperatur und 45 % relativer Feuchtigkeit getrocknet.

Auf der Unterseite trug die Membran Kanäle mit den Dimensionen 40 x 100 µm. Sie hatte eine mittlere Dicke von ca. 80 µm. Parallel zu den Kanälen wurde sie in Streifen mit ca. 25 mm Breite zerteilt. Der Schnitt wurde mittig in den kanalfreien Bereich gelegt. Aus den Streifen wurden Membranplättchen gebildet, indem die Streifen senkrecht zu der Kanalrichtung an den Enden der Kanäle so abgeschnitten wurden, dass die Kanäle zu den Stirnflächen hin offen waren.

### Beispiel 4: Herstellung eines Stoffaustauschapparates

Eine Platte aus Polymethylmethacrylat (PMMA) wurde mit einer ca. 10 µm dicken Schicht eines Acrylatklebers (Duroteck 3872825, National Starch, ICI) gleichmäßig beschichtet. Nach Ausdampfen des Lösemittels wurde ein Membranplättchen nach Beispiel 3 sorgfältig blasenfrei aufgeklebt. Über die Stirnseiten des Membranplättchens wurden PMMA-Streifen von 3 mm Dicke und 10 mm Breite mit L-förmiger Ausnehmung von 4 mm x 1 mm geklebt und mit Epoxid-Kleber (RS Quick set epoxy adhesive, RS Components, Mörfelden-Walldorf, Germany) zur Membranoberfläche und zur Seite hin abgedichtet. In die zweite Seite wurde ein Schlauch mit 1,0 mm Außendurchmesser eingeklebt. Die gebildete Austauschfläche betrug 14 x 20 mm.

Durch die Anordnung wurde Wasser mit 1 µl/min gepumpt. Nach Eintauchen des Stoffaustauschapparates in eine wässrige Farbstofflösung (Patentblau, Fluka, Best.Nr. 76270; 0,35 Gew.%) fand durch die Membran hindurch Diffusion des Farbstoffes statt und die Lösung im Ausgangsschlauch wurde farbig.

## Patentansprüche

1. Flächige permeable Membran,
**dadurch gekennzeichnet,**
**dass** sie auf mindestens einer Seite Ausnehmungen aufweist, wobei die Abmessungen der Ausnehmungen die nominelle Porengröße der Membran mindestens um den Faktor 5 übertreffen.

2. Membran nach Anspruch 1
**dadurch gekennzeichnet,**
**dass** die Abmessungen der Ausnehmungen die nominelle Porengröße der Membran mindestens um den Faktor 10 übertreffen.

3. Membran nach Anspruch 1 oder 2,
**dadurch gekennzeichnet,**
**dass** die Ausnehmungen als Kanalstrukturen ausgebildet sind.

4. Membran nach einem der Ansprüche 1 bis 3,
**dadurch gekennzeichnet,**
**dass** die Ausnehmungen einen mittleren Durchmesser von 5-500 µm aufweisen.

5. Membran nach einem der Ansprüche 1 bis 4,
**dadurch gekennzeichnet,**
**dass** sie aus einem Polymermaterial aufgebaut ist.

6. Membran nach einem der Ansprüche 1 bis 4,
**dadurch gekennzeichnet,**
**dass** sie aus einem Keramikmaterial aufgebaut ist.

7. Vorrichtung, insbesondere zum Stoffaustausch über eine Membran, **dadurch gekennzeichnet,**
**dass** sie mindestens eine flächige permeable Membran nach einem der Ansprüche 1 bis 6 in Kombination mit einem nichtpermeablen, vorzugsweise planaren Träger enthält.

8. Vorrichtung, insbesondere zum Stoffaustausch über eine Membran, **dadurch gekennzeichnet,**
**dass** sie mindestens zwei flächige permeable Membranen nach einem der Ansprüche 1 bis 6 enthält.

9. Verwendung einer Membran nach einem der Ansprüche 1 bis 6 oder einer Vorrichtung nach einem der Ansprüche 7 bis 8 in einem Stoffaustauschprozess.

10. Verwendung nach Anspruch 9 für die Mikrofiltration, Ultrafiltration, Dialyse, Nanofiltration oder Gasfiltration.

11. Verfahren zur Herstellung einer Membran nach einem der Ansprüche 1 bis 6, umfassend die Schritte:
(a) Bereitstellen eines Substrats, das auf seiner Oberfläche Erhebungen als Negativ der gewünschten Ausnehmungen aufweist,
(b) Aufbringen des Membranmaterials oder eines Vorläufers davon auf das Substrat und
(c) Formen der Membran auf dem Substrat.
